(19) Europäisches Patentamt
European Patent Office
Office européen des brevets

(11) Publication number: **0 097 383 B1**

(12) **EUROPEAN PATENT SPECIFICATION**

(45) Date of publication of patent specification: **01.04.87**

(51) Int. Cl.[4]: **C 08 L 67/06**, C 08 F 283/00, C 08 C 19/42

(21) Application number: **83200552.4**

(22) Date of filing: **18.04.83**

(54) **Polyester moulding compositions.**

(30) Priority: **17.05.82 US 378679**

(43) Date of publication of application: **04.01.84 Bulletin 84/01**

(45) Publication of the grant of the patent: **01.04.87 Bulletin 87/14**

(84) Designated Contracting States: **BE DE FR GB IT NL SE**

(56) References cited:
**US-A-3 427 364**
**US-A-3 976 628**
**US-A-4 020 036**
**US-A-4 158 654**

**The file contains technical information submitted after the application was filed and not included in this specification**

(73) Proprietor: **SHELL INTERNATIONALE RESEARCH MAATSCHAPPIJ B.V.**
**Carel van Bylandtlaan 30**
**NL-2596 HR Den Haag (NL)**

(72) Inventor: **Halper, Walter Marvin**
**6215 Hummingbird**
**Houston Texas (US)**
Inventor: **Gergen, William Peter**
**11311 Hylander St.**
**Houston Texas (US)**

(74) Representative: **Aalbers, Onno et al**
**P.O. Box 302**
**NL-2501 CH The Hague (NL)**

**EP 0 097 383 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention is concerned with a moulding composition comprising:
a) an unsaturated, crosslinkable thermosetting resin;
b) an ethylenically unsaturated monomer;
c) a reinforcing agent, a filler or mixtures thereof as additive and
d) a normally solid, carboxy-containing styrene-butadiene block copolymer.

Such a composition is useful e.g. as bulk moulding composition (BMC) or sheet moulding composition (SMC), which should exhibit a high impact strength, a smooth surface and low shrinkage/low profile characteristics.

USP 4,020,036 discloses a moulding composition comprising an unsaturated polyester, a normally solid carboxy-containing styrene-butadiene block copolymer, a vinyl monomer, a catalyst, a reinforcing agent and a filler. Although this reference discloses a composition comprising a normally solid, carboxy-containing styrene-butadiene block copolymer, it does not specify how to prepare these carboxy-containing block copolymers. Furthermore, the vinyl content in the butadiene part of the block copolymer may vary over a wide range of from 5 to 76 per cent according to this reference.

It has now been found that a moulding composition comprising an unsaturated, crosslinkable thermosetting resin, an ethylenically unsaturated monomer, a reinforcing agent and/or a filler and a normally solid carboxy-containing styrene-butadiene block copolymer, exhibits an improved impact strength and an improved surface gloss together with low profile/low shrinkage characteristics as BMC or SMC, provided the carboxy-containing styrene-butadiene block copolymer has been prepared in a specific way and provided the 1,2-vinyl content of the butadiene part of the block copolymer corresponds to specific values.

Accordingly, the present invention is concerned with a moulding composition comprising:
a) an unsaturated, crosslinkable thermosetting resin;
b) an ethylenically unsaturated monomer;
c) a reinforcing agent, a filler or mixtures thereof as additive and
d) a normally solid, carboxy-containing styrene-butadiene block copolymer, characterized in that the molding composition comprises a normally solid, carboxy-containing styrene-butadiene block copolymer prepared by contacting a monolithium terminated styrene-butadiene block copolymer solution with carbon dioxide by introducing dry gaseous carbon dioxide into said polymer solution at a temperature of from 20°C to 100°C, at a pressure of from 103 kPa (abs) to 793 kPa (abs) and at a molar ratio of carbon dioxide added to lithium terminated block copolymer of from 0.75:1 to 3.0:1, the butadiene portion of the monolithium terminated styrene-butadiene block copolymer having prior to the contact of this block copolymer with carbon dioxide a microstructure of between 30 and 40 mol per cent 1,2-vinyl, between 20 and 30 mol per cent 1,4-cis and between 30 and 50 mol per cent 1,4-trans.

A key aspect of the present invention is the microstructure of the butadiene block of the styrene-butadiene block copolymer (abbreviated SB block copolymer). This microstructure, as determined by conventional infra-red analysis using the 910 $cm^{-1}$ band, is as follows (expressed in mol per cent):

| | | Preferred |
|---|---|---|
| 1,2-vinyl | 30 to 40 | 35 |
| 1,4-cis | 20 to 30 | 25 |
| 1,4-trans | 30 to 50 | 40 |

The desired weight average molecular weights of the styrene block and butadiene block of each block copolymer arm are:

| | | Preferred |
|---|---|---|
| Styrene block | 8,000 to 20,000 | 11,000 to 15,000 |
| Butadiene block | 30,000 to 100,000 | 60,000 to 80,000 |

The carboxy-containing polymer is typically prepared by anionic polymerization employing an organomonolithium initiator. The first step of the process involves contacting the styrene monomer and the organo-monolithium compound in the presence of an inert diluent therein forming a living polymer compound having the simplified structure S—Li. The inert diluent may be an aromatic or naphthenic hydrocarbon, e.g., benzene or cyclohexane, which may be modified by the presence of an alkene or alkane such as pentenes or pentanes. Specific examples of suitable diluents include n-pentane, n-hexane, isooctane, cyclohexane, toluene, benzene and xylene. The organomonolithium compounds are represented by the formula RLi; wherein R is an aliphatic, cycloaliphatic, or aromatic radical, or

combinations thereof, preferably containing from 2 to 20 carbon atoms per molecule. A much preferred initiator is sec-butyllithium. The concentration of the initiator can be regulated to control the molecular weight of the polymer. Generally, the initiator concentration is in the range of about 0.25 to 50 millimoles per 100 grams of monomer although both higher and lower initiator levels can be used if desired. The required initiator level frequently depends upon the solubility of the initiator in the hydrocarbon diluent. These polymerization reactions are usually carried out at a temperature in the range of −51°C to 149°C and at pressures which are sufficient to maintain the reaction mixture in the liquid phase.

Next, the living polymer in solution is contacted with a butadiene monomer. The resulting living polymer has a simplified structure S—B-i.

The medium vinyl polybutadiene block is readily obtained by employing a small amount of a polar material as a vinyl promoter. The vinyl promoter conveniently is added to the hydrocarbon diluent at the appropriate time in the polymerization sequence. These promoters can be selected from ethers, tertiary amines, and other promoters.

Preferred are dimethoxybenzene, tetrahydrofuran, 1,2-dimethoxyethane, dimethyl ether, diethyl ether, methyl ethyl ether, ethyl propyl ether, di-n-propyl ether, di-n-octyl ether, anisole, dibenzyl ether, diphenyl ether, dimethylethylamine, tri-n-propylamine, tri-n-butylamine, trimethylamine, triethylamine, N,N-dimethylaniline, N-ethylpiperidine, N-methyl-N-ethylaniline, N-methylmorpholine and N,N,N′,N′-tetramethylethylenediamine. The amount of polar compound employed will vary widely with the choice of vinyl promoter, but should be that amount necessary to promote the degree of vinylization desired. An exemplary amount would be in the range of about 0.01 to 25 parts by weight per hundred parts monomer. The average molecular weights of the polystyrene blocks of the block copolymer are determined by gel permeation chromatography, whereas the polystyrene content of the polymer is measured by infra-red spectroscopy of the finished polymer.

After formation of the butadiene block, the living polymer is contacted with carbon dioxide, by introducing dry gaseous carbon dioxide in the living polymer solution. A second key aspect of the present invention is that said contact is carried out at a temperature between 20°C and 100°C and at a pressure between 103 and 793 kPa (abs.) and that the amount of $CO_2$ added is such that the molar ratio of $CO_2$ added to SB—Li is between 0.75:1 and 3.0:1, preferably between 1.0:1 and 2.0:1. Under these circumstances a mixture of block copolymer structures is obtained comprising 20—80 preferably 40—60 percent weight of uncoupled block copolymer, 10—40 preferably 15—25 percent weight of coupled linear block copolymer and 10—40 preferably 25—35 percent weight of coupled radial block copolymer, comprising a minor amount of radial block copolymers having four arms. The uncoupled block copolymer probably comprises a mixture of block copolymer structures differing with respect to the terminating group only.

Next the polymer is recovered by known finishing techniques.

The unsaturated, crosslinkable thermosetting resins include both unsaturated vinyl ester resins and unsaturated polyester resins. The vinyl ester resins are typically prepared by the esterification of polyepoxides with ethylenically unsaturated monocarboxylic acids in the presence of onium salts of inorganic acids. The vinyl ester resins have a typical formula:

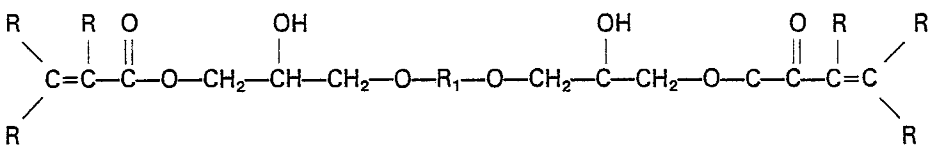

and are prepared by reacting a glycidyl polyether of a polyhydric phenol with an acrylic acid in the presence of an onium salt.

The composition of the polymerizable unsaturated polyester resin component of the moulding compositions of this invention may be varied widely. The polymerizable unsaturated polyester portion thereof is ordinarily prepared by the reaction of an alpha,beta-ethylenically unsaturated dicarboxylic acid, or an admixture of such an acid with a saturated dicarboxylic acid, and a dihydric alcohol. Among the ethylenically unsaturated dicarboxylic acids which may be used are maleic acid, fumaric acid, mesaconic acid, aconitic acid, citraconic acid, ethyl maleic acid, xeronic acid and itaconic acid. Halogen substituted derivatives of these acids may also be utilized. The anhydrides of these acids, where the anhydrides exist, are embraced under the term "acid" since the reaction products or polyesters obtained by utilizing such acids and anhydrides are the same, and, in fact, in many instances it is preferred to utilize the anhydride rather than the free acid.

The dihydric alcohol component of the polyester includes such compounds as ethylene glycol, diethylene glycol, triethylene glycol, polyethylene glycol, 1,3-propanediol, 1,2-propanediol, di-1,3-propanediol, butylene glycol and halogen substituted glycols. Small amounts of polyols with a functionality greater than two may be utilized in conjunction with the dihydric component.

As indicated hereinabove, in many instances it is desirable to utilize a portion of a saturated dicarboxylic acid in conjunction with the ethylenically unsaturated dicarboxylic acid component. Examples of useful saturated acids include phthalic acid, isophthalic acid, terephthalic acid, succinic acid, adipic acid,

suberic acid, azelaic acid, sebacic acid, dimethyl succinic acid, as well as halogenated derivatives of the above acids.

The inclusion of a saturated dicarboxylic acid, such as described hereinabove, in an unsaturated polyester resin does not alter the beneficial effects realized from the addition of a small quantity of the carboxy-containing polymer. Generally, a saturated dicarboxylic acid is included as one of the components utilized in the preparation of an unsaturated polyester resin as some physical properties are improved by such inclusion. The term "unsaturated polyester resin" as used in the resin industry is interpreted as a resin utilizing an unsaturated dicarboxylic acid as at least a portion of the acid component of the polyester; therefore, the term embraces those resins which also utilize a saturated dicarboxylic acid as a portion of the acid component.

The cross-linkable polyester resins and vinyl ester resins obtained can be readily cross-linked by uniting them with ethylenically unsaturated monomers, i.e., monomeric compounds containing a

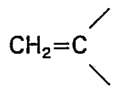

group. Styrene and vinyl toluene are most frequently utilized as the cross-linking monomer, although many other monomers may also be employed. Styrene is the most preferred monomer. Such other monomers include divinyl benzene, ethyl alpha-methyl styrene, chloro- and fluoro-styrenes, diallyl phthalate, triallyl cyanurate, allyl diglycolate, diallyl phenyl phosphonate, diethylene glycol bis(allyl carbonate), 1,2-propylene glycol bis(allyl carbonate), bis(allyl lactate) carbonate, allyl succinyl allyl glycolate, allyl maleate, methallyl maleate, alkyl methacrylates such as methyl methacrylate and ethyl methacrylate, alkyl acrylates such as methyl acrylate, ethyl acrylate, propyl acrylate and butyl acrylate, vinyl acetate and allyl acetate.

The catalysts used in this invention are conventional free radical polymerization initiators selected from among organic peroxides and the hydroperoxides such as benzoyl peroxide, dicumyl peroxide, methyl ethyl ketone peroxide, lauryl peroxide, cyclohexanone peroxide, t-butyl perbenzoate, t-butyl hydroperoxide, t-butylbenzene hydroperoxide, cumene hydroperoxide and t-butyl peroctoate. In addition, azo compounds such as azobis isobutyronitrile can be employed. A presently preferred catalyst is t-butyl perbenzoate.

The reinforcing agents used in this invention comprise fibres selected from glass, asbestos, carbon, graphite, metal, synthetic polymers such as polyamides, polyesters, polyolefins and natural fibres such as cotton, jute, hemp, sisal, flax, wood, paper and the like. A preferred fibre is glass. The fibres can be used in the form of mats, fabrics, threads and chopped fibres.

Another typical component in SMC and BMC is a thickening agent. These agents are usually oxides or hydroxides of a Group II metal. These agents include specifically oxides and hydroxides of magnesium, calcium, strontium, barium and zinc.

In addition to the previously named components of the compositions of this invention other optional additives can be used. These include fillers, pigments, colorants, lubricants, stabilizers and silane coupling agents. Fillers include calcium carbonate, calcium silicate, talc, clay, alumina, aluminium hydroxide, antimony trioxide, silica, mica, barium sulphate, calcium sulphate and mixtures thereof. Preferred fillers include calcium carbonate, clay, talc and surface-treated fillers.

A lubricant such as aluminium, barium, calcium, magnesium or zinc stearate can be used to impart mould release properties to the compositions.

Conventional colorants and pigments such as $TiO_2$, carbon black, phthalocyanine pigments and mixtures thereof can be employed in amounts sufficient to give the desired colour to the final moulded product.

The ingredients are incorporated by a milling technique which involves moderate to high shear. This can be accomplished by means of twin-rotor mixers designed to give moderate shear to the paste-like ingredients. It is essential to provide some shear and because of the viscosity of the materials being mixed, proper mixing cannot be obtained simply by stirring or by using a conventional impeller mixer. On the other hand, high intensity mixing would generate excessive heat (above 35°C) and activation of the catalyst which must be avoided. Sheet moulding compounding line mixing equipment can also be used. This mixing under sufficient shear to achieve good dispersion of the ingredients without heat build-up activating the catalyst insures a good blend and is necessitated by the fact that the carboxyl polymer is a normally solid material. Shear which gives a heat build-up of 1—50, preferably 2—30°C is satisfactory. Low shear is preferred for BMC to avoid glass degradation.

The curing can be done at a temperature known in the art for the particular catalyst utilized. Generally a temperature of 100°C to 200°C and a time of 1 to 15 minutes in a press is sufficient.

The relative amounts of each component are readily determined and adjusted by one skilled in the art. Relative amounts of various components are expressed below in parts by weight:

| | | Typical BMC formulation |
|---|---|---|
| unsaturated thermosetting resin | 30 to 50 | 42 |
| ethylenically unsaturated monomer | 35 to 60 | 46 |
| filler | 100 to 200 | 150 |
| glass fibres | 75 to 150 | 100 |
| carboxy-containing polymer | 8 to 20 | 12 |
| thickening agent | 1 to 4 | 2 |
| mould release agent | 2 to 6 | 4 |
| catalyst | 0.5 to 3 | 1 |

The invention is further illustrated by means of the following examples.

Example I

Various bulk moulding compositions (BMC) were prepared with varying types of rubbers. The formulation for the BMC was as follows (expressed in parts by weight):

| Component | Amount |
|---|---|
| Unsaturated polyester | 42 |
| Rubber additive | 12 |
| Styrene monomer | 46 |
| Glass roving | 100 |
| Calcium carbonate | 150 |
| Zinc stearate | 4 |
| T-butyl perbenzoate (TBPB) | 1 |
| Magnesium oxide | 2 |

In the formulations, the polyester employed was a propylene glycol-maleate polyester resin. In actual practice, the polyester was combined with 18 parts of the styrene monomer while the rubber additive was separately combined with the remaining 28 parts styrene monomer.

The various components were mixed under standard conditions. Then plaques were compression moulded from each component for 2 minutes at 175°C (peak exotherm) and 6894 kPa. Each plaque was then evaluated to determine its physical properties.

All the rubber components employed in the BMC are based on alkyl lithium-prepared styrene-butadiene block copolymers. Block copolymer 11 is Solprene 312 rubber purchased from Phillips Petroleum and may have been prepared according to US—A—4,020,036. Three of the polymers are uncoupled diblocks (block copolymers 1, 9 and 10), with one (block copolymer 9) having a higher vinyl content for the butadiene portion. Block copolymers 2, 3 and 4 are commercially available from Shell Chemical Company under the trade names Kraton DX1116, Kraton D1101 and Kraton D1102, respectively, block copolymers 5 and 6 have been coupled with dimethyl adipate and block copolymers 8 and 11 with carbon dioxide. The degree of coupling is shown in Table 1 by reference to the various species—$SB_1$, $SB_2$, $SB_3$, $SB_4$. For example, $SB_2$ signifies a polymer species having the structure SB—x—BS while $SB_3$ signifies a polymer species having the structure

S
B
|
SB—x—BS,

where x is the coupling residue. Some of the polymers were coupled or reacted with $CO_2$. These are block copolymers 7, 8 and 11. Only block copolymer 7 is according to the invention; the 1,2-vinyl content of the butadiene portion in the other two polymers is too low. The description of the polymer and the impact value (unnotched Izod determined by ASTM 256) are presented in Table 1:

TABLE 1

| Block copolymer number | Rubber component | | | | | | BMC | |
|---|---|---|---|---|---|---|---|---|
| | SB Molecular weight×1000 | Percent weight of species | | | | Percent 1,2 vinyl of butadiene portion | Percent weight styrene | Unnotched Izod (kg · m/m) |
| | | $SB_1$ | $SB_2$ | $SB_3$ | $SB_4$ | | | |
| 1 | 130 | 100 | — | — | — | 10 | 25 | 44 |
| 2 | 56 | 15 | 5 | 30 | 50 | 10 | 21 | 49.5 |
| 3 | 52 | 15 | 85 | — | — | 10 | 31 | 55 |
| 4 | 35 | 15 | 85 | — | — | 10 | 28 | 44 |
| 5 | 95 | 15 | 5 | 30 | 50 | 10 | 15 | 44 |
| 6 | 92 | 15 | 5 | 30 | 50 | 35 | 14 | 49.5 |
| 7 | 83 | 46 | 23 | 31 | — | 35 | 14 | 60.5 |
| 8 | 104 | 39 | 35 | 26 | — | 10 | 14 | 44 |
| 9 | 83 | 100 | — | — | — | 35 | 14 | 38.5 |
| 10 | 104 | 100 | — | — | — | 10 | 14 | 44 |
| 11 | 85 | 59 | 21 | 17 | 3 | 14 | 15 | 49.5 |

Example II

Two different sheet moulding compositions (SMC) were prepared with two different rubbers. One rubber was block copolymer 11 and the other was a polymer according to the present invention designated block copolymer 12. Block copolymer 12 was prepared by 1) polymerizing 8,154 g styrene in 73,386 g cyclohexane in the presence of 479.3 ml sec-butyllithium for 15 minutes at 50°C; 2) preparing the living styrene-butadiene block copolymer by polymerizing 22,831 g butadiene in 114,880 g cyclohexane and 43,488 g of the solution obtained in step 1 in the presence of 16.75 ml orthodimethoxybenzene; 3) introducing 16 g gaseous carbon dioxide in 15 seconds beneath the surface of the polymer solution and allowing the living polymer to react with the carbon dioxide at 45°C during 2 minutes and 4) terminating the reaction with 20 ml methanol.

A comparison between the two polymers is given in Table 2.

TABLE 2

| | Styrene block molecular weight×1000 | S—B Block molecular weight×1000 | Percent weight species | | | | Percent 1,2 vinyl of butadiene portion |
|---|---|---|---|---|---|---|---|
| | | | $SB_1$ | $SB_2$ | $SB_3$ | $SB_4$ | |
| Block copolymer 12 | 12 | 85 | 44 | 22 | 30 | 4 | 35 |
| Block copolymer 11 | 13 | 85 | 59 | 21 | 17 | 3 | 14 |

The two rubbers were employed in identical SMC formulations. The formulations had the following components (expressed in parts by weight):

SMC Formulation

| | |
|---|---|
| Unsaturated polyester resin solution | 420 |
| Rubber | 126 |
| Styrene monomer | 294 |
| TBPB | 9 |
| Pigment | 3 |
| Zinc stearate | 39 |
| Calcium carbonate | 1,260 |
| Magnesium oxide | 21 |
| Glass fibres | 840 |
| Total | 3,011 |

About 300 pounds of each formulation was prepared according to standard conditions. A portion of the SMC was then compression moulded into flat plaques and the plaques were analyzed according to standard tests. These test results are presented in Table 3.

TABLE 3

| | Hardness, Barcol | Shrinkage, mm | Density, $g/cm^3$ | Initial viscosity, Pa · s | Tensile, $kg/m^2$ | % Strain | Flex, $kg/m^2$ | Flex. mod., $kg/m^2$ | Notched Izod, kg · m/m | Unnotched Izod, kg · m/m |
|---|---|---|---|---|---|---|---|---|---|---|
| Block copolymer 11 | 35 | $4.32\times10^{-3}$ | 1.80 | 54 | $8.19\times10^{6}$ | 1.58 | $16.80\times10^{6}$ | $963.11\times10^{6}$ | 81.78 | 101.64 |
| Block copolymer 12 | 20 | $6.35\times10^{-3}$ | 1.78 | 48 | $7.32\times10^{6}$ | 1.46 | $16.53\times10^{6}$ | $1012.32\times10^{6}$ | 80.55 | 110.66 |

The physical properties were determined in accordance with the test procedures as follows:
Flexural modulus and flexural strength, ASTM D790
Tensile and elongation, ASTM D256
Shrinkage, ASTM D955
Hardness, Barcol.
In addition, truck doors were also fabricated from the SMC's. Results are presented below in Table 4:

TABLE 4

| | Tensile, kg/m$^2$ | Flex, kg/m$^2$ | Flex. mod. kg/m$^2$ |
|---|---|---|---|
| Block copolymer 11 | $5.09\times10^6$ | $15.37\times10^6$ | $913.9\times10^6$ |
| Block copolymer 12 | $5.34\times10^6$ | $19.16\times10^6$ | $1054.5\times10^6$ |

In addition to having the best property balance, the doors made with SMC according to the present invention also had the best surface appearance.

**Claims**

1. A moulding composition comprising:—
a) an unsaturated, crosslinkable thermosetting resin;
b) an ethylenically unsaturated monomer;
c) a reinforcing agent, a filler or mixtures thereof as additive and
d) a normally solid, carboxy-containing styrene-butadiene block copolymer, characterized in that the moulding composition comprises a normally solid, carboxy-containing styrene-butadiene block copolymer prepared by contacting a monolithium terminated styrene-butadiene block copolymer solution with carbon dioxide by introducing dry gaseous carbon dioxide into said polymer solution at a temperature of from 20°C to 100°C, at a pressure of from 103 kPa (abs) to 793 kPa (abs) and at a molar ratio of carbon dioxide added to lithium terminated block copolymer of from 0.75:1 to 3.0:1,
the butadiene portion of the monolithium terminated styrene-butadiene block copolymer having prior to the contact of this block copolymer with carbon dioxide a microstructure of between 30 and 40 mol per cent 1,2-vinyl, between 20 and 30 mol per cent 1,4-cis and between 30 and 50 mol per cent 1,4-trans.

2. The composition of claim 1, characterized in that the preparation of the normally solid carboxy-containing block copolymer has been carried out at a molar ratio of carbon dioxide added to lithium terminated block copolymer of from 1.0:1 to 2.0:1.

3. The composition of claim 1, characterized in that said thermosetting resin is a polyester resin.

4. The composition of claim 3, characterized in that said polyester resin has been prepared by reacting an unsaturated dicarboxylic acid and a polyol.

5. The composition of claim 1 or claim 3, characterized in that said unsaturated monomer is styrene.

6. The composition of claim 1, characterized in that said additive is calcium carbonate.

7. The composition of claim 1, characterized in that said additive is a mixture of calcium carbonate and chopped fibre glass.

8. The composition of claim 1, characterized in that the composition additionally comprises a catalyst.

9. The composition of claim 8, characterized in that said catalyst is an organic peroxide.

10. The composition of claim 1, characterized in that the weight average molecular weight of each styrene block in the block copolymer prior to the reaction with carbon dioxide is between 8,000 and 20,000 and the weight average molecular weight of each butadiene block in said block copolymer prior to the reaction with carbon dioxide is between 30,000 and 100,000.

**Patentansprüche**

1. Formmasse, bestehend aus
a) einem ungesättigten, vernetzbaren, heiß härtenden Harz,
b) einem ethylenisch ungesättigten Monomer,
c) einem Verstärkungsmittel, einem Füllstoff oder Gemischen davon als Zusatz, und
d) einem normalerweise festen carboxyhaltigen Styrol/Butadien-Blockcopolymer, dadurch gekennzeichnet, daß die Formmasse ein normalerweise festes carboxyhaltiges Styrol/Butadien-Blockcopolymer enthält, das hergestellt worden ist durch Zusammenbringen einer Lösung eines Styrol/Butadien-Blockcopolymers mit einem endständigen Lithiumatom, mit Kohlendioxid durch Einleiten von trocknenem gasförmigen Kohlendioxid in die Polymerlösung bei einer Temperatur von 20°C bis 100°C,

bei einem Druck von 103 kPa (abs) bis 793 kPa (abs) und mit einem Molverhältnis von zugesetztem Kohlendioxid zu Blockcopolymer mit endständigem Lithium von 0,75:1 bis 3,0:1,

wobei der Butadienanteil des Styrol/Butadien-Blockcopolymers mit einem endständigen Lithiumatom vor dem Zusammenbringen dieses Blockcopolymers mit Kohlendioxid eine Mikrostruktur von zwischen 30 und 40 Mol-% 1,2-Vinyl, zwischen 20 und 30 Mol-% 1,4-cis und zwischen 30 und 50 Mol-% 1,4-trans aufweist.

2. Masse nach Anspruch 1, dadurch gekennzeichnet, daß die Herstellung des normalerweise festen carboxyhaltigen Blockcopolymers bei einem Molverhältnis von zugesetztem Kohlendioxid zu Blockcopolymer mit endständigem Lithium von 1,0:1 bis 2,0:1 durchgeführt worden ist.

3. Masse nach Anspruch 1, dadurch gekennzeichnet, daß das heiß härtende Harz ein Polyesterharz ist.

4. Masse nach Anspruch 3, dadurch gekennzeichnet, daß das Polyesterharz hergestellt worden ist durch Umsetzung einer ungesättigten Dicarbonsäure mit einem Polyol.

5. Masse nach Anspruch 1 oder Anspruch 3, dadurch gekennzeichnet, daß das ungesättigte Monomer Styrol ist.

6. Masse nach Anspruch 1, dadurch gekennzeichnet, daß der Zusatz Calciumcarbonat ist.

7. Masse nach Anspruch 1, dadurch gekennzeichnet, daß der Zusatz ein Gemisch von Calciumcarbonat und zerhackten Glasfasern ist.

8. Masse nach Anspruch 1, dadurch gekennzeichnet, daß die Masse zusätzlich einen Katalysator enthält.

9. Masse nach Anspruch 8, dadurch gekennzeichnet, daß der Katalysator ein organisches Peroxid ist.

10. Masse nach Anspruch 1, dadurch gekennzeichnet, daß das Gewichtsmittel des Molekulargewicht jedes Styrolblocks in dem Blockcopolymer vor der Umsetzung mit Kohlendioxid zwischen 8000 und 20000 liegt, und das Gewichtsmittel des Molekulargewichts jedes Butadienblocks in dem Blockcopolymer vor der Umsetzung mit Kohlendioxid zwischen 30000 und 100000 liegt.

## Revendications

1. Composition à mouler comprenant:

a) une résine insaturée, réticulable et thermodurcissable;

b) un monomère à insaturation éthylénique;

c) un agent renforçant, une charge ou leurs mélanges, comme additif; et

d) un copolymère séquencé styrène-butadiène carboxylé normalement solide, caractérisée en ce que la composition à mouler comprend un copolymère séquencé styrène-butadiène carboxylé normalement solide préparé en mettant en contact une solution de copolymère séquencé styrène-butadiène à terminaison monolithium avec du dioxyde de carbone en introduisant du dioxide de carbone gazeux sec dans la dite solution de polymère à une température de 20°C à 100°C, sous une pression de 103 kPa (abs) à 793 kPa (abs) et selon un rapport molaire du dioxyde de carbone ajouté au copolymère séquencé à terminaison lithium de 0,75:1 à 3,0:1, la partie butadiène du copolymère séquencé styrène-butadiène à terminaison monolithium ayant, avant le contact de ce copolymère séquencé avec le dioxyde de carbone, une microstructure comportant entre 30 et 40% en moles de 1,2-vinyle, entre 20 et 30% en moles de 1,4-cis et entre 30 et 50% en moles de 1,4-trans.

2. Composition selon la revendication 1, caractérisée en ce que la préparation du copolymère séquencé carboxylé normalement solide a été réalisée en rapport molaire du dioxyde de carbone ajouté au copolymère séquencé à terminaison lithium de 1,0:1 à 2,0:1.

3. Composition selon la revendication 1, caractérisée en ce que la dite résine thermodurcissable est une résine polyester.

4. Composition selon la revendication 3, caractérisée en ce que la résine polyester a été préparée en faisant réagir un acide dicarboxylique insaturé et un polyol.

5. Composition selon la revendication 1 ou 3, caractérisée en ce que le dit monomère insaturé est le styrène.

6. Composition selon la revendication 1, caractérisée en ce que le dit additif est le carbonate de calcium.

7. Composition selon la revendication 1, caractérisée en ce que le dit additif est un mélange de carbonate de calcium et de fibres de verre découpées.

8. Composition selon la revendication 1, caractérisée en ce que la composition comprend en outre un catalyseur.

9. Composition selon la revendication 8, caractérisée en ce que le dit catalyseur est un peroxyde organique.

10. Composition selon la revendication 1, caractérisée en ce que le poids moléculaire moyen en poids de chaque séquence de styrène dans le copolymère séquencé avant la réaction avec le dioxyde de carbone est compris entre 8 000 et 20 000 et le poids moléculaire moyen en poids de chaque séquence de butadiène dans le dit copolymère séquencé avant la réaction avec le dioxyde de carbone est compris entre 30 000 et 100 000.